# EUROPEAN PATENT APPLICATION

(11) **EP 2 472 457 A1**
(43) Date of publication of application: **04.07.2012**
(21) Application number: 11195449.1
(22) Date of filing: 22.12.2011
(51) Int. Cl.: G06Q 10/06

(54) **Systems and methods for use in correcting a predicted failure in a production process**

(30) Priority: 04.01.2011 US 984378
(71) Applicant: General Electric Company, Schenectady, NY 12345 (US)
(72) Inventor: Mcmullin, Dale Robert, Atlanta GA 30339 (US)
(74) Representative: Cleary, Fidelma

(57) **Abstract**

A system for use in operating a production process is provided. The system includes a memory device (110) configured to store a predicted failure of a production asset, the predicted failure associated with a predicted failure time, and a processor (115) coupled in communication with the memory device and is programmed to determine a plurality of correction scenarios for the predicted failure, wherein each correction scenario is associated with a correction time prior to the predicted failure time, and estimate a total cost for each correction scenario of the plurality of correction scenarios based at least in part on a cost of repairing the production asset and a cost of downtime associated with the correction scenario.

## Description

### BACKGROUND OF THE INVENTION

The field of the disclosure herein relates generally to production processes and, more specifically, to systems and methods for use in correcting predicted failures of production assets.

At least some known production systems rely on production assets, such as mechanical components, to transform one or more inputs (e.g., fuel) into one or more outputs (e.g., electrical power). Such production assets may eventually degrade or fail, thus reducing the performance of the production system and/or halting the production system completely.

At least some known production systems include a work order system that facilitates scheduling of maintenance and/or repair work to be performed on production assets. Such systems are generally used to schedule routine or periodic maintenance on the system, and/or to schedule a repair action after a production asset has failed. Accordingly, production asset failures may introduce excessive downtime and cost, especially when such failures are interspersed with routine maintenance.

### BRIEF DESCRIPTION OF THE INVENTION

This Brief Description is provided to introduce a selection of concepts in a simplified form that are further described below in the Detailed Description. This Brief Description is not intended to identify key features or essential features of the claimed subject matter, nor is it intended to be used as an aid in determining the scope of the claimed subject matter.

In a first aspect, the present invention resides in a system for use in operating a production process. The system includes a memory device configured to store a predicted failure of a production asset. The predicted failure is associated with a predicted failure time. The system also includes a processor that is coupled in communication with the memory device and programmed to determine a plurality of correction scenarios for the predicted failure. Each correction scenario is associated with a correction time prior to the predicted failure time. The processor is also programmed to estimate a total cost for each correction scenario of the plurality of correction scenarios based at least in part on a cost of repairing the production asset and a cost of downtime associated with the correction scenario.

In another aspect, the invention resides in a method for use in operating a production process is provided. The method includes determining by a computing device a plurality of correction scenarios for a predicted production asset failure associated with a predicted failure time. Each correction scenario is associated with a correction time equal to or before the predicted failure time. A total cost for each correction scenario of the plurality of correction scenarios is estimated by the computing device based at least in part on a cost of repair and a cost of downtime associated with the correction scenario. A first correction scenario of the plurality of correction scenarios is selected based at least in part on a total cost of the first correction scenario, and a maintenance task is scheduled by the computing device based on the first correction scenario.

The invention resides in a computer program comprising computer program code means adapted to perform all the steps of the above method and in the computer program embodied on a computer readable media.

### BRIEF DESCRIPTION OF THE DRAWINGS

Embodiments of the invention will now be described, by way of example only, with the accompanying drawings in which:
Fig. 1 is a block diagram of an exemplary computing device;
Fig. 2 is block diagram of an exemplary production control system that includes a production monitoring device, a production control device, an enterprise resource planning device, and a client device coupled in communication via a network;
Fig. 3 is a flowchart of an exemplary method for use in operating a production process;
Fig. 4 is a flowchart of an exemplary method that may be used with the method shown in Fig. 3 in determining correction scenarios;
Fig. 5 is an exemplary user interface for displaying and selecting correction scenarios.

### DETAILED DESCRIPTION OF THE INVENTION

The embodiments described herein facilitate cost-efficient maintenance of a production process by calculating an estimated total cost for various corrections to a predicted failure. As used herein, the term "production process" refers to a physical manipulation of one or more inputs by one or more production assets to produce one or more outputs. A production asset may include any piece of equipment and/or material used to transform inputs into outputs. The production assets involved in a production process may be collectively referred to as a production system. A production process may include, but is not limited to only including, power generation, manufacturing, resource treatment (e.g., water treatment or recycling), and/or any other process that physically transforms inputs into outputs.

Production assets may degrade over time and eventually fail. A production asset may be considered to fail when it ceases functioning as designed, or when it exhibits a property or behavior that is outside a predetermined specification. Such failures may be predicted prior to occurrence, as described in more detail herein. In response to a predicted failure, one or more correction scenarios may be determined. A correction scenario may include one or more operations designed to repair a production asset. As used herein, the term "repair" includes, but is not limited to only including, adjusting, calibrating, reconditioning, and/or replacing a production asset. The repair of a production asset may further be associated with personnel resource requirements, such as a professional license, a training level and/or a certification. A total cost may be estimated for each correction scenario based on factors such as those described above.

An exemplary technical effect of the methods, systems, and apparatus described herein includes at least one of (a) predicting a failure of a production asset associated with a predicted failure time; (b) determining a plurality of correction scenarios for the predicted failure, wherein each correction scenario is associated with a correction time equal to or before the predicted failure time; (c) estimating a total cost for each correction scenario of the plurality of correction scenarios based at least in part on a cost of repair and a cost of downtime associated with the correction scenario; (d) selecting a first correction scenario of the plurality of correction scenarios based at least in part on a total cost of the first correction scenario; (e) scheduling a maintenance task based on the first correction scenario; and (f) adjusting a level of operation of a production process.

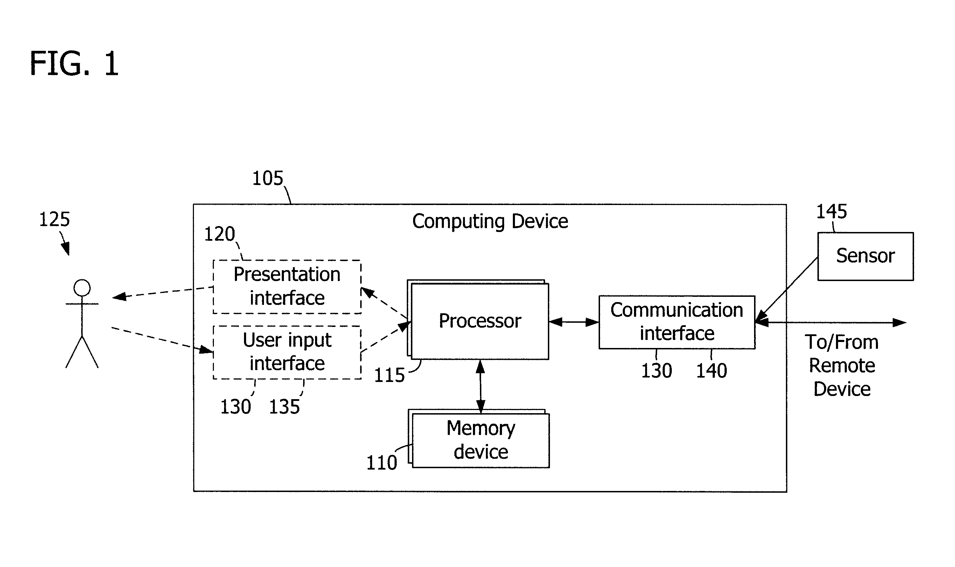

Fig. 1 is a block diagram of an exemplary computing device 105. In the exemplary embodiment, computing device 105 includes a memory device 110 and a processor 115 coupled to memory device 110 for executing instructions. In some embodiments, executable instructions are stored in memory device 110. Computing device 105 is performs one or more operations described herein by programming processor 115. For example, processor 115 may be programmed by encoding an operation as one or more executable instructions and providing the executable instructions in memory device 110. Processor 115 may include one or more processing units (e.g., in a multicore configuration).

Memory device 110 is one or more devices that enables information such as executable instructions and/or other data to be stored and retrieved. Memory device 110 may include one or more computer readable media, such as, without limitation, dynamic random access memory (DRAM), static random access memory (SRAM), a solid state disk, and/or a hard disk. Memory device 110 may be configured to store, without limitation, computer-executable instructions, production site data, production asset data, predicted failures of production assets, production process data (e.g., sensor readings), a maintenance schedule (e.g., scheduled maintenance tasks), repair data (e.g., materials and/or labor required to repair a production asset), and/or any other type of data. In some embodiments, memory device 110 stores asset attribute data, such as brand, type, and/or operating specifications. A predicted failure may be calculated or derived based on comparing current "sensed" behavior to historical behavior from similar assets. For example, such a failure may be predicted at least in part by curve fitting a failure model against past behavior.

In some embodiments, computing device 105 includes a presentation interface 120 that is coupled to processor 115. Presentation interface 120 presents information, such as a user interface, application source code, input events, and/or validation results to a user 125. For example, presentation interface 120 may include a display adapter (not shown in Fig. 1) that may be coupled to a display device, such as a cathode ray tube (CRT), a liquid crystal display (LCD), an organic LED (OLED) display, and/or an "electronic ink" display. In some embodiments, presentation interface 120 includes one or more display devices. In addition to, or in the alternative, presentation interface 120 may include an audio output device (e.g., an audio adapter and/or a speaker) and/or a printer.

In some embodiments, computing device 105 includes an input interface 130, such as a user input interface 135 or a communication interface 140. Input interface 130 may be configured to receive any information suitable for use with the methods described herein.

In the exemplary embodiment, user input interface 135 is coupled to processor 115 and receives input from user 125. User input interface 135 may include, for example, a keyboard, a pointing device, a mouse, a stylus, a touch sensitive panel (e.g., a touch pad or a touch screen), a gyroscope, an accelerometer, a position detector, and/or an audio input interface (e.g., including a microphone). A single component, such as a touch screen, may function as both a display device of presentation interface 120 and user input interface 135.

Communication interface 140 is coupled to processor 115 and is configured to be coupled in communication with one or more remote devices, such as another computing device 105 and/or one or more sensors 145. For example, communication interface 140 may include, without limitation, a serial communication adapter, a wired network adapter, a wireless network adapter, and/or a mobile telecommunications adapter. Communication interface 140 may also transmit data to one or more remote devices. For example, a communication interface 140 of one computing device 105 may transmit predicted production asset failures, correction scenarios, cost information, and/or maintenance tasks to the communication interface 140 of another computing device 105.

In some embodiments, computer device 105 includes one or more sensors 145 that are configured to provide an indication of an operating condition. For example, sensor 145 may include, without limitation, an accelerometer, a vibration sensor, a position sensor, a speed sensor, a gear ratio sensor, a temperature sensor, a humidity sensor, a pressure sensor, a power output sensor, a voltage sensor, a current sensor, and/or any sensor suitable for use with the methods described herein.

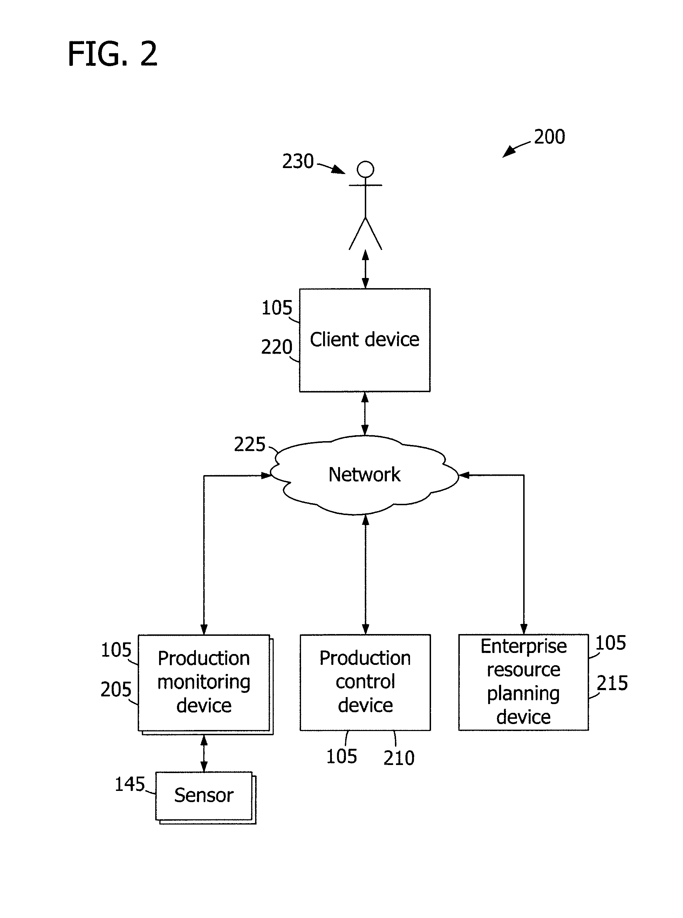

Fig. 2 is block diagram of an exemplary system 200 including a production monitoring device 205, a production control device 210, an enterprise resource planning device 215, and a client device 220 coupled in communication via a network 225. Network 225 may include, without limitation, the Internet, a local area network (LAN), a wide area network (WAN), a wireless LAN (WLAN), a mesh network, and/or a virtual private network (VPN). While certain operations are described below with respect to particular computing devices 105, it is contemplated that any computing device 105 may perform one or more of the described operations. For example, production control device 210 may perform all of the operations below.

Production monitoring device 205, production control device 210, enterprise resource planning device 215, and client device 220 are computing devices 105 (shown in Fig. 1). In the exemplary embodiment, each computing device 105 is coupled to network 225 via communication interface 140 (shown in Fig. 1). In an alternative embodiment, production control device 210 is integrated with client device 220 and/or with enterprise resource planning 215.

Production monitoring device 205 is configured to monitor a production process. For example, production monitoring device 205 may be coupled in communication with one or more sensors 145. In an exemplary embodiment, sensors 145 provide to production monitoring device 205 signals that indicate operating conditions of one or more production assets in a production process.

Client device 220 interacts with a user 230 (e.g., via user input interface 135 and/or presentation interface 120, shown in Fig. 1). For example, client device 220 may be configured to present correction scenarios to user 230 and to receive a selection of a correction scenario from user 230, as described in more detail below.

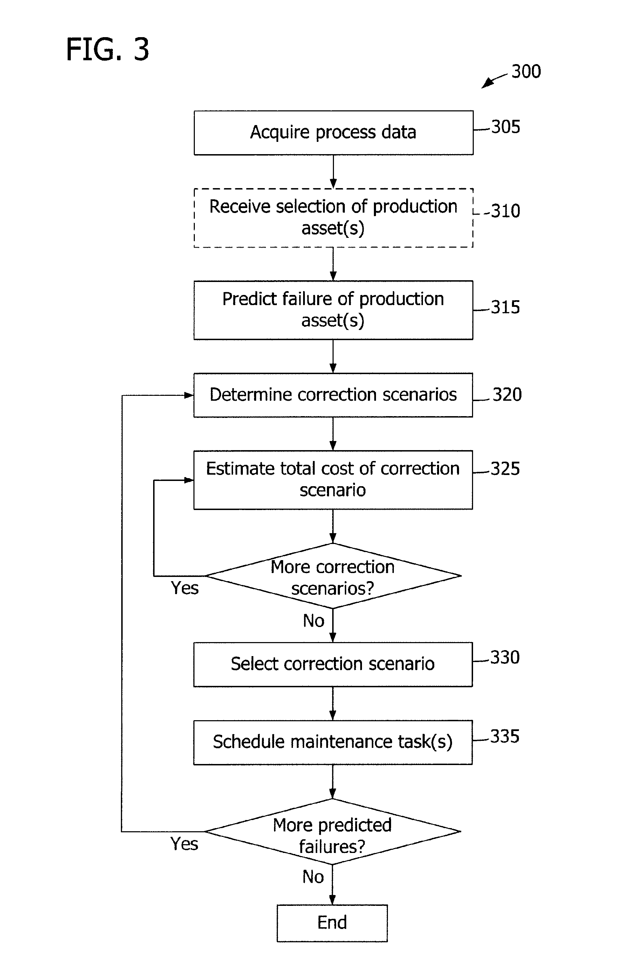

Fig. 3 is a flowchart of an exemplary method 300 for use in operating a production process. Referring to Figs. 2 and 3, in an exemplary embodiment, production control device 210 acquires 305 process data associated with one or more production processes. For example, process data may include sensor readings from one or more production monitoring devices 205. In addition to, or in the alternative, process data may include production asset data, such as an age of a production asset. In an exemplary embodiment, production control device 210 acquires 305 process data from production monitoring devices 205 at a plurality of locations. For example, each production process of a plurality of production processes may be associated with a site, and each site may include a plurality of locations.

Production control device 210 optionally receives 310 a selection of one or more production assets. In an exemplary embodiment, user 230 selects one or more locations, such as a site or a location within a site, and production control device 210 identifies the production assets that are associated with the selected location(s). For example, a site may include a plurality of power generators, and each power generator may be associated with a location.

Production control device 210 predicts 315 a failure of one or more production assets. If a selection of production assets has been received 310, production control device 210 may predict 315 failures only within the selected production assets. Otherwise, production control device 210 may predict 315 failures within any production assets of which production control device 210 is aware. In an exemplary embodiment, a production asset failure represents a malfunction of a production asset or a degradation of a property (e.g., thickness) or a performance (e.g., vibration) of a production asset to a point above or below a predetermined threshold value.

A predicted failure is associated with a predicted failure time at which the production asset is predicted 315 to fail. In an exemplary embodiment, production asset failures are predicted 315 using a production prognostics system. For example, a failure of a production asset may be predicted 315 based on, for example, an age of the production asset, an operating duration (e.g., hours of operation) of the production asset, a duty cycle of a production asset, and/or one or more operating conditions associated with the production asset. Operating conditions may be determined based at least in part on sensor readings and may include, but are not limited to only including, temperature, pressure, humidity, orientation, voltage, flow rate, speed, torque, and vibration. For example, a trend of increasing vibration in a rotating assembly may indicate an impending failure of a bearing.

Failures may be predicted 315 within a predetermined time range, such as the duration from a current date through 30 days, 90 days, or 180 days from the current date. If multiple production asset failures are predicted 315 within the predetermined time range, method 300 may proceed with the earliest such production asset failure or with each production asset failure.

In some embodiments, production control device 210 predicts 315 the failure of a production asset by executing a plurality of prediction algorithms to produce a plurality of predicted failure times. The predicted failure times may be combined into a statistical distribution, and a single predicted failure time is determined based on the statistical distribution. For example, the predicted failure time may be equal to a mean value or a median value of the statistical distribution.

Production control device 210 determines 320 a plurality of potential correction scenarios for the production asset failure. Each correction scenario includes one or more operations for addressing the predicted production asset failure. The operations may include, for example, terminating the production process; replacing and/or repairing one or more production assets; testing, inspecting, and/or certifying one or more production assets; adjusting a level of operation (e.g., a power output or a line speed) of the production process; and restarting the production process.

Each correction scenario is associated with a correction time at which the correction scenario is to be executed. For example, the correction time may be equal to or prior to the predicted failure time. Alternatively, the correction time may be subsequent to the predicted failure time, and the correction scenario may include decreasing a level of operation to enable reducing stress on the production asset and/or deferring the predicted failure of the production asset. In some embodiments, a threshold value (e.g., 100%) defines a level of operation above which production asset failure is accelerated. The level of operation of the production process may be adjusted to be greater than the threshold value, increasing output and shifting the predicted production asset failure to a time at which the production asset can be repaired without significant additional cost (e.g., coincidental with an existing maintenance task).

Production control device 210 estimates 325 a total cost for each correction scenario based at least in part on a cost of repair and a cost of downtime associated with the correction scenario. In an exemplary embodiment, each operation included in a correction scenario is associated with a quantity of labor and/or a quantity of one or more materials, and production control device 210 acquires cost information from enterprise resource planning (ERP) device 215 based on the labor and/or the materials associated with the operations. For example, ERP device 215 may provide a cost of labor, a cost of materials (e.g., parts, equipment, and/or consumable materials), and/or a cost of testing, inspecting, and/or certifying one or more production assets. The costs corresponding to the operations associated with a correction scenario may be added to calculate an estimated cost of repair.

Also included in the estimated total cost for a correction scenario is a cost of downtime. In an exemplary embodiment, a downtime duration is determined based on the operations included in the correction scenario. For example, the time required for each operation in a series of operations (e.g., shutdown, repair, test, and restart) may be added to calculate a period corresponding to the correction scenario, which may be referred to as a downtime duration. The downtime duration may be multiplied by a unit cost of downtime (e.g., dollars per minute) associated with the production process to calculate a cost of downtime. The unit cost of downtime may include, but is not limited to only including, a loss of a benefit (e.g., revenue) from operating the production process (e.g., an opportunity cost), a cost of acquiring a substitute (e.g., purchasing a utility from another facility), a cost of idle labor, and/or a regulatory or contractual penalty (e.g., for failure to operate at an agreed level of operation). Further, the unit cost of downtime may be dependent on conditions such as a time of day and/or a predicted demand or sale price for the output of the production process.

One of the correction scenarios is selected 330 from the plurality of correction scenarios based at least in part on a total cost of the first correction scenario. In one embodiment, the correction scenarios are presented to user 230 by client device 220, and client device 220 transmits to production control device 210 a selection of one correction scenario by user 230. In another embodiment, production control device 210 automatically selects 330 a correction scenario having a lowest total cost among the plurality of correction scenarios. In addition to, or alternatively, client device 220 may present an automatically selected correction scenario to user 230 as a recommendation and transmit to production control device 210 a confirmation of the automatically selected correction scenario or a selection of a different correction scenario.

Production control device 210 schedules 335 a maintenance task based on the first correction scenario. For example, production control device 210 may submit a work order to ERP device 215. The maintenance task is scheduled for a time that is approximately equal to (e.g., within 24 hours of) the correction time associated with the first correction scenario. If multiple failures are predicted 315, method 300 may continue with determining 320 correction scenarios for the next production asset failure.

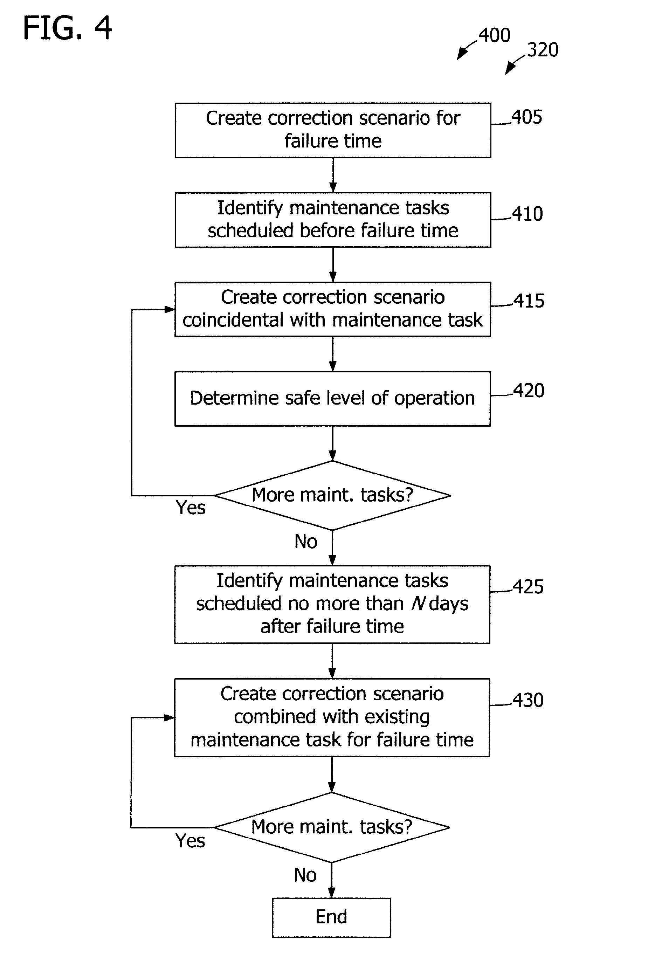

Fig. 4 is a flowchart of an exemplary method 400 that may be used with method 300 in determining 320 correction scenarios. Referring to Figs. 2 and 4, in the exemplary embodiment, a correction scenario is created 405 with a correction time approximately equal to (e.g., within 24 hours of) the predicted failure time.

Some embodiments facilitate determining a correction time based at least in part on an existing maintenance task associated with the production process. In the exemplary embodiment, maintenance tasks that are scheduled between a current time and the failure time are identified 410. For example, production control device 210 may query ERP device 215 for such maintenance tasks. For each maintenance task identified 410, a correction scenario is created 415 coincidental with the maintenance task. For example, the maintenance task may be scheduled for a start time and have an expected duration of downtime associated with the production process. A correction scenario may be created 415 and associated with a correction time within the expected downtime. Scheduling correction scenarios to be coincidental with an existing maintenance task facilitates consolidating tasks and reducing overall downtime.

The production process is generally operated at a first level of operation. For example, the first level of operation may be a normal power output level of a power generating process or a normal production rate (e.g., units per minute) of a manufacturing process. Alternatively, the first level of production may be a curtailed level of a production due to a predicted failure of one or more production assets.

In some embodiments, when a correction scenario is created 415 and associated with a correction time earlier than the predicted failure time, production control device 210 determines 420 a second level of operation at which the production process can be safely operated between a current time and the correction time. For example, if a particular production asset has been predicted 315 (shown in Fig. 3) to fail, the second level of operation may be determined by again predicting 315 a failure of the production asset with a series of levels of operation that are greater than the first level of operation. Similarly, such a prediction capability may be used to solve for the level of operation with a failure date set approximately equal to the correction time.

In such an embodiment, because the production asset will be repaired or replaced before the original failure date, the second level of operation may be greater than the first level of operation. If so, production control device 210 may estimate 325 (shown in Fig. 3) the total cost of the correction scenario based further on a benefit associated with operating the production process at the second level of operation. The benefit may be determined based on a difference between the first level of operation and the second level of operation. For example, operating the production process at the second level of operation between a current time and the correction time associated with the correction scenario may result in additional revenue, and this additional revenue may at least partially offset the total cost of the correction scenario.

Some embodiments facilitate consolidating a correction scenario with an existing maintenance task scheduled after a predicted failure. In such an embodiment, production control device 210 identifies 425 one or more existing maintenance tasks that are associated with (e.g., will result in downtime of) the production process and are scheduled for a time subsequent to the predicted failure time. In one embodiment, production control device 210 identifies 425 maintenance tasks scheduled for a time no more than a predetermined number (N) of days after the predicted failure time. N may be any number of days appropriate for maintenance task forecasting. For example, *N* may be 7, 15, 30, or 60 days.

For each identified maintenance task, production control device 210 creates 430 a correction scenario that is combined with the identified maintenance task and associated with a correction time approximately equal to (e.g., within 24 hours of) the predicted failure time. Accordingly, similar to a correction scenario created 415 to be coincidental with a pre-failure-date maintenance task, a correction scenario that is created 430 in combination with an existing post-failure-date maintenance task results in a consolidation or combination of an existing maintenance task with a correction scenario.

Estimating 325 the total cost for a correction scenario that is combined with an existing maintenance task may include determining a cost reduction predicted to result from combining the existing maintenance task with the correction scenario. In one embodiment, production control device 210 may calculate a cost of downtime based on an incremental downtime predicted to result from executing the correction scenario coincidentally with the second maintenance task. For example, if an existing maintenance task requires three hours of downtime, and the correction scenario includes operations that require four hours of downtime, combining the correction scenario with the existing maintenance task may add an incremental downtime of only one hour (4 hours - 3 hours). Other costs that may be calculated on an incremental basis may include, but are not limited to only including, the cost of labor, the cost of equipment delivery, and/or the cost of testing, inspecting, and/or certifying one or more production assets.

In some cases, such as when an existing maintenance task and a correction scenario involve the same production asset or closely related production assets, the incremental cost may be zero. For example, if the existing maintenance task requires testing a rotating component, a correction scenario that includes an operation for replacing a bearing of the rotating component and an operation for testing the rotating component may add no incremental testing cost.

Referring to Figs. 3 and 4, in one embodiment, a correction scenario is created 430 in combination with an existing, post-failure-date maintenance task, and that correction scenario is selected 330. In such an embodiment, scheduling 335 a maintenance task for the selected correction scenario may include rescheduling the existing maintenance task to be coincidental with the new maintenance task.

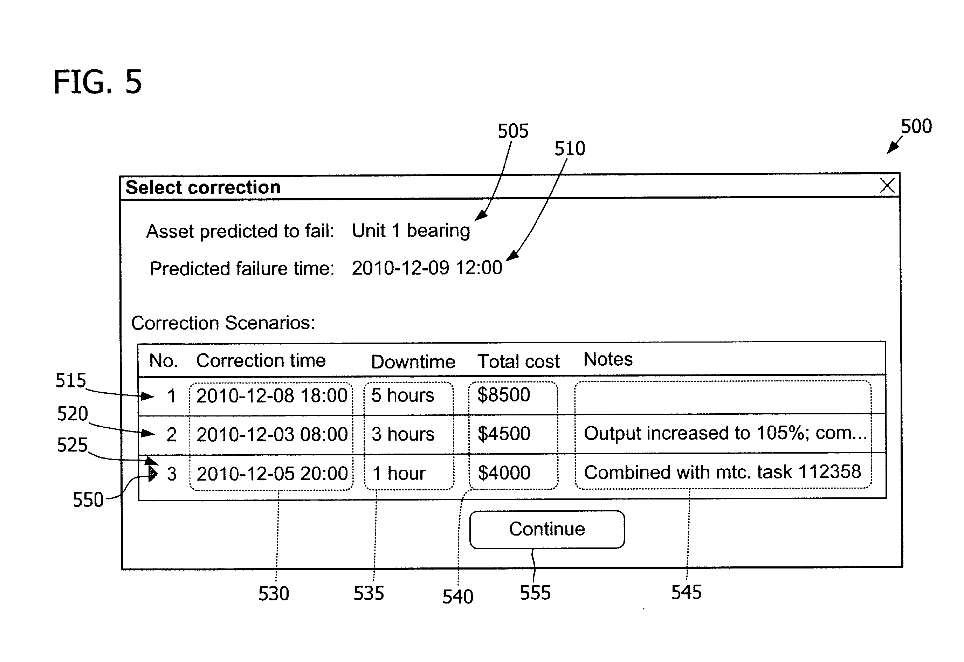

Fig. 5 is an exemplary user interface 500 for displaying and selecting correction scenarios. User interface 500 displays information about a predicted failure of a production asset and may be presented by client device 220 and/or production control device 210 (shown in Fig. 2).

In the exemplary embodiment, user interface 500 includes a production asset name 505 and a predicted failure time 510 for a production asset predicted 315 (shown in Fig. 3) to fail. User interface also displays a plurality of correction scenarios that have been determined to address the predicted failure. In the exemplary embodiment, a first correction scenario 515, a second correction scenario 520, and a third correction scenario 525 are displayed. Notes 545 may be populated automatically by production control device 210.

For each correction scenario 515, 520, 525, user interface 500 displays a correction time 530, a downtime 535, a total cost 540, and notes 545. Downtime 535 may be expressed as an incremental downtime when a correction scenario is combined with an existing maintenance task. Notes 545 include, for example, information about a level of operation adjustment associated with a correction scenario, information about any existing maintenance tasks combined with a correction scenario, and/or any other information relevant for selection of a correction scenario.

In the exemplary embodiment, user interface 500 displays a recommended correction scenario indicator 550 to indicate that third correction scenario 525 has been selected 330 (shown in Fig. 3) by production control device 210. For example, third correction scenario 525 may be selected 330 based on third correction scenario being associated with a lowest total cost 540 among the displayed correction scenarios. When a continue button 555 is selected, production control device 210 schedules 335 (shown in Fig. 3) a maintenance task based on the correction scenario selected in user interface 500.

Embodiments provided herein enable automatically determining correction scenarios to address predicted failures of production assets. Further, a total cost may be estimated for each correction scenario, allowing an operator or a computer system to easily select a most cost-efficient option. Such options may include a correction scenario in which a level of operation is temporarily increased to offset downtime cost or a correction scenario that is combined with an existing task to reduce total downtime. Accordingly, the total cost of a production asset failure may be reduced.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other apparatus and methods.

Some embodiments involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above examples are exemplary only, and thus are not intended to limit in any way the definition and/or meaning of the term processor.

While the invention has been described in terms of various specific embodiments, those skilled in the art will recognize that the invention may be practiced with modification within the spirit and scope of the claims.

## Claims

1. A system for use in operating a production process, said system comprising:
a memory device (110) configured to store a predicted failure of a production asset, the predicted failure associated with a predicted failure time; and
a processor (115) coupled in communication with said memory device and programmed to:
determine a plurality of correction scenarios for the predicted failure, wherein each correction scenario is associated with a correction time prior to the predicted failure time; and
estimate a total cost for each correction scenario of the plurality of correction scenarios based at least in part on a cost of repairing the production asset and a cost of downtime associated with the correction scenario.

2. A system according to Claim 1, wherein said processor (115) is further arranged to calculate the cost of repairing the production asset for each correction scenario of the plurality of correction scenarios based at least in part on a cost of labor and a cost of materials.

3. A system according to Claim 1 or 2, wherein said processor (115) is arranged to estimate the total cost for each correction scenario based further on at least one of a cost of testing the production asset, a cost of inspecting the production asset, and a cost of certifying the production asset.

4. A system according to any of Claims 1 to 3, wherein the production process is operated at a first level of operation, and said processor (115) is further arranged to:
determine a second level of operation at which the production process can be safely operated between a current time and the correction time associated with a first correction scenario of the plurality of correction scenarios; and
estimate the total cost for the first correction scenario based further on a difference between the first level of operation and the second level of operation.

5. A system according to any Claims 1 to 4, wherein said processor (115) is arranged to determine a correction time associated with a first correction scenario of the plurality of correction scenarios based at least in part on an existing maintenance task associated with the production process.

6. A system according to any preceding Claim, further comprising an input interface (130) coupled in communication with said processor (115) and configured to receive a selection of a correction scenario, wherein said processor is further programmed to schedule a maintenance task based on the selected correction scenario.

7. A method for use in operating a production process, said method comprising:
determining by a computing device a plurality of correction scenarios for a predicted production asset failure associated with a predicted failure time, wherein each correction scenario is associated with a correction time equal to or before the predicted failure time;
estimating by the computing device a total cost for each correction scenario of the plurality of correction scenarios based at least in part on a cost of repair and a cost of downtime associated with the correction scenario;
selecting a first correction scenario of the plurality of correction scenarios based at least in part on the total cost of the first correction scenario; and
scheduling by the computing device a maintenance task based on the first correction scenario.

8. A method according to Claim 7, wherein the production process is configured to operate at a first level of operation, said method further comprising:
determining a second level of operation at which the production process can be safely operated between a current time and the correction time associated with the first correction scenario; and
estimating the total cost for the first correction scenario based further on a difference between the first level of operation and the second level of operation.

9. A method according to Claim 7 or 8, wherein determining the second level of operation comprises determining a level of operation that is higher than the first level of operation, and estimating the total cost for the first correction scenario comprises calculating a benefit associated with operating the production process at the second level of operation.

10. A method according to any of Claims 7 to 9, wherein selecting the first correction scenario comprises automatically selecting by the computing device a correction scenario having a lowest total cost among the plurality of correction scenarios.

11. A method according to any of Claims 7 to 10, further comprising calculating the cost of downtime associated with each correction scenario of the plurality of correction scenarios based at least in part on a benefit predicted to result from operating the production process during a period corresponding to the correction scenario.

12. A method according to any of Claims 7 to 11, wherein the maintenance task is a first maintenance task, said method further comprising:
associating the first correction scenario with a correction time coincidental with a second maintenance task that will result in downtime of the production process; and
calculating a cost of downtime based on an incremental downtime predicted to result from executing the first correction scenario coincidentally with the second maintenance task.

13. A method according to any of Claims 7 to 12, wherein determining the first correction scenario comprises:
identifying a second maintenance task associated with the production process and scheduled for a time subsequent to the predicted failure time; and
combining the second maintenance task with the first correction scenario, wherein estimating the total cost for the first correction scenario comprises determining a cost reduction predicted to result from combining the second maintenance task with the first correction scenario.

14. A computer program comprising computer program code means adapted to perform all the steps of any of claims 7 to 13, when said program is run on a computer.

15. A computer program as claimed in claim 14, embodied on a computer readable media.
